Europäisches Patentamt

European Patent Office

Office européen des brevets

(11) Veröffentlichungsnummer: **0 159 464**
**B1**

(12) **EUROPÄISCHE PATENTSCHRIFT**

(45) Veröffentlichungstag der Patentschrift:
**07.01.88**

(51) Int. Cl.⁴: **F 04 D 29/58**, F 04 D 19/04

(21) Anmeldenummer: **85100567.8**

(22) Anmeldetag: **21.01.85**

(54) Molekularvakuumpumpe.

(30) Priorität: **24.03.84 DE 3410905**

(43) Veröffentlichungstag der Anmeldung:
**30.10.85 Patentblatt 85/44**

(45) Bekanntmachung des Hinweises auf die Patenterteilung:
**07.01.88 Patentblatt 88/1**

(84) Benannte Vertragsstaaten:
**CH DE FR GB LI**

(56) Entgegenhaltungen:
**EP - A - 0 086 460**
**BE - A - 447 093**
**DE - A - 3 001 134**
**FR - A - 1 208 950**
**FR - A - 2 105 902**
**NL - A - 275 089**
**US - A - 1 586 160**
**US - A - 3 150 822**
**US - A - 3 700 247**
**US - A - 3 963 247**

(73) Patentinhaber: **LEYBOLD AKTIENGESELLSCHAFT,**
**Bonner Str. 504, D-5000 Köln 51 (DE)**

(72) Erfinder: **Deters, Ludger, Dr., Am Heidstamm 36,**
**D-5000 Köln 40 (DE)**
Erfinder: **Engländer, Heinrich, Hauptstrasse 66,**
**D-5172 Linnich 2 (DE)**
Erfinder: **Kabelitz, Hans-Peter, Dr.,**
**Siebengebirgsallee 5a, D-5000 Köln 90 (DE)**
Erfinder: **Schütz, Günter, Luisenstrasse 2a,**
**D-5000 Köln 21 (DE)**

(74) Vertreter: **Leineweber, Jürgen, Am Heidstamm 78a,**
**D-5000 Köln 40 (DE)**

(56) Entgegenhaltungen: (Fortsetzung)
**KONSTRUKTION, Band 31, Nr. 12, 1979, Seiten 483-492,**
**Springer-Verlag, Berlin, DE; K. HEITEL: "Berechnung**
**und Konstruktion von Gewinde-Wellendichtungen im**
**laminaren Bereich"**
**PATENTS ABSTRACTS OF JAPAN, Band 7, Nr. 71**
**(M-202)[1216], 24. März 1983**

## Beschreibung

Die Erfindung bezieht sich auf eine Molekularvakuumpumpe bzw. Molekularvakuumpumpenstufe mit einem Rotor, mit einem den Rotor umgebenden Stator sowie mit einem den Stator seinerseits umgebenden Gehäuse, wobei die einander zugewandten Flächenbereiche des Rotors und/oder des Stators mit einer gewindeähnlichen, die Gasförderung bewirkenden Struktur versehen sind.

Molekularvakuumpumpen gehören zusammen mit den Turbomolekularvakuumpumpen zu den Reibungspumpen, deren Wirkungsweise in dem Lehrbuch von Wutz, Adam und Walcher «Theorie und Praxis der Vakuumtechnik», S. 202 ff., beschrieben ist. Bei Molekularpumpen sind eine sich bewegende Rotorwand und eine ruhende Statorwand so gestaltet und beabstandet, dass die von den Wandungen auf dazwischen befindliche Gasmoleküle übertragenen Impulse eine bevorzugte Richtung haben. In der Regel sind Rotor- und/oder Statorwand mit spiral- oder wendelförmigen Vertiefungen oder Vorsprüngen zur Erzielung der bevorzugten Förderrichtung ausgerüstet. Aus den deutschen Patentschriften 605 902, 625 444, 912 007 und aus den CH-Patentschriften 101 871, 222 288 sowie der GB-A 332 879 sind nach diesem Prinzip arbeitende Molekularpumpen bekannt.

Bei Turbomolekularpumpen dienen axial hintereinander angeordnete, turbinenartig gestaltete Stator- und Rotorschaufeln der Förderung der Gase. Weiterhin ist aus der DE-A 24 12 624 eine kombinierte Reibungspumpe bekannt. Diese ist eintrittsseitig als Turbomolekularpumpe und austrittsseitig als Molekularpumpe ausgebildet.

Schliesslich sind noch sogenannte Molekulardichtungen bekannt (vgl. zum Beispiel die aus der DE-A-30 01 134 vorbekannte dynamische Rillendichtung). Hierbei handelt es sich um Abdichtungen zwischen einem rotierenden (Rotor) und einem stehenden Teil (Stator), zum Beispiel der Abdichtung einer Welle, bei welcher ebenfalls gewindeartige Vorsprünge vorhanden sind. Der Gasdurchsatz durch Molekulardichtungen ist jedoch extrem klein, so dass sie die Funktion von Vakuumpumpen nicht erfüllen können.

Der beschriebene Stand der Technik zeigt, dass Molekularpumpen der eingangs genannten Art in vielfacher Form und Gestaltung vorgeschlagen wurden. Dennoch haben sie sich bisher auf dem Markt nicht durchsetzen können. Die wesentliche Ursache dafür sind die mit ihrem Aufbau verbundenen technologischen Schwierigkeiten. Insbesondere müssen die Spalte zwischen den stehenden und bewegten Flächen extrem klein gehalten werden, um Rückströmungen in Grenzen zu halten. Ein besonderer Nachteil ist dabei ihre Temperaturempfindlichkeit. Es besteht bei stärkeren Temperaturschwankungen die Gefahr des Anlaufens der sich schnell relativ zueinander bewegenden Flächen. Darüber hinaus verändern bereits geringe Temperaturschwankungen die Abstandsverhältnisse im Bereich des Spaltes in starkem Masse, was zur Folge hat, dass sich damit auch die Pumpeigenschaften stark verändern. Die dadurch bereits bei relativ geringfügigen Temperaturschwankungen auftretenden wechselnden Betriebsbedingungen stellen einen störenden Parameter für das Betriebsverhalten dar. Bei Turbomolekularvakuumpumpen treten diese Schwierigkeiten nicht auf, da die Abstandsverhältnisse bei axial hintereinander angeordneten Stator- und Rotorschaufeln nicht so kritisch sind. Turbomolekularvakuumpumpen haben sich deshalb seit ca. 10 Jahren äusserst erfolgreich auf dem Markt durchgesetzt. Auf eine wirtschaftliche Netzung der mit Molekularpumpen verbundenen Vorteile musste jedoch bisher verzichtet werden.

Diese Vorteile liegen insbesondere darin, dass eine Molekularvakuumpumpe in grösseren Druckbereichen als Turbomolekularpumpen einsetzbar sind. Nicht nur im Molekularströmungsbereich (Hoch- und Ultrahochvakuum), sondern auch — und insbesondere dort — im viskosen Strömungsbereich (Fein- und Grobvakuum) haben Molekularvakuumpumpen zum Teil bessere Pumpeigenschaften als Turbomolekularpumpen.

Der vorliegenden Erfindung liegt die Aufgabe zugrunde, eine Molekularvakuumpumpe zu schaffen, bei der die Beeinflussung der Pumpeigenschaften durch schwankende Aussentemperaturen weitestgehend vermieden ist.

Erfindungsgemäss wird diese Aufgabe dadurch gelöst, dass zwischen dem Stator und dem umgebenden Gehäuse ein Ringspalt vorgesehen ist und dass dieser Ringspalt zur Erzielung einer thermischen Isolierung evakuiert ist. Durch diese Massnahmen wird zum einen erreicht, dass sprunghafte Änderungen der Aussentemperatur infolge des Vorhandenseins einer wirksamen «Vakuum»-Isolierung keinen unmittelbaren Einfluss auf den Stator haben und damit die Gefahr eines Anlaufens der sich relativ zueinander bewegenden Flächen beseitigt ist. Weiterhin wird infolge des hohen Wärmewiderstandes zwischen dem Stator und dem äusseren Gehäuse erreicht, dass sich Rotor und Stator stets gleichmässig erwärmen und damit für eine temperaturunabhängige Spaltsituation zwischen den einander zugewandten Flächen sorgen.

Besonders zweckmässig ist eine Lösung, bei der der Stator als separate Buchse gestaltet ist, die sich im Bereich ihrer Stirnseiten unter Bildung des Ringspaltes über federnde Zylinderabschnitte im äusseren Gehäuse abstützt. Bei Temperaturänderungen kann der Stator in diesen Ringspalt «hineinwachsen», so dass sich die Verhältnisse des Förderspaltes wegen der gleichmässig erfolgenden Temperaturänderung von Stator und Rotor nicht oder nur äusserst geringfügig ändern. Sind die Massen von Rotor und Stator etwa gleich gewählt, dann ist die erwünschte Gleichmässigkeit von Temperaturänderungen sichergestellt.

Weitere Vorteile und Einzelheiten der Erfindung sollen anhand von in den Figuren 1 bis 3 dargestellten Ausführungsbeispielen erläutert werden. Es zeigen:

Fig. 1 eine kombinierte Reibungspumpe, bei der die Molekularpumpenstufe erfindungsgemäss gestaltet ist,

Fig. 2 eine Molekularpumpe nach der Erfindung und

Fig. 3 eine zusätzlich mit einer wirksamen Abdichtung ausgerüstete Reibungspumpe nach Fig. 1.

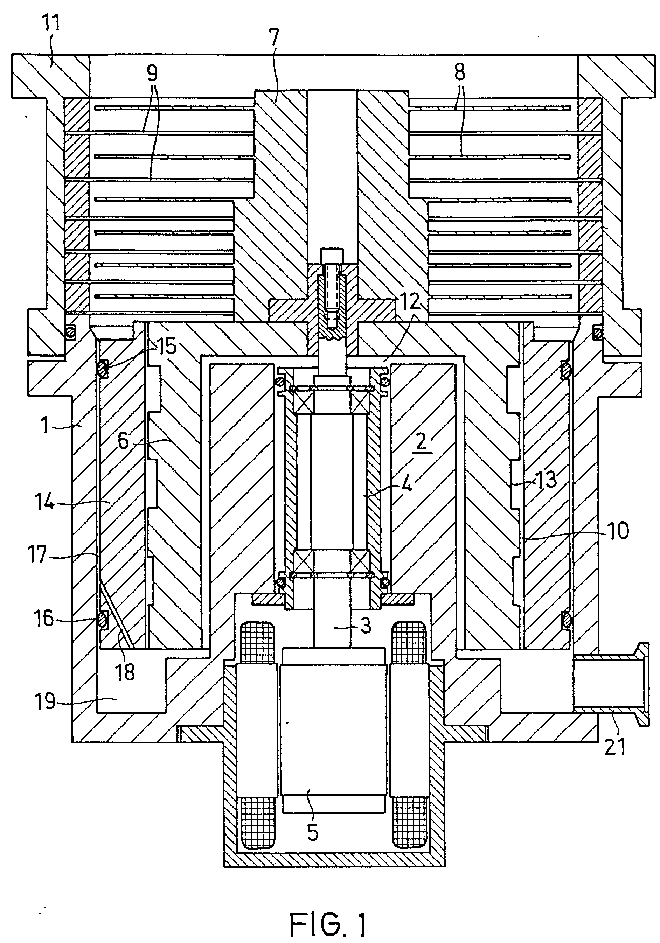

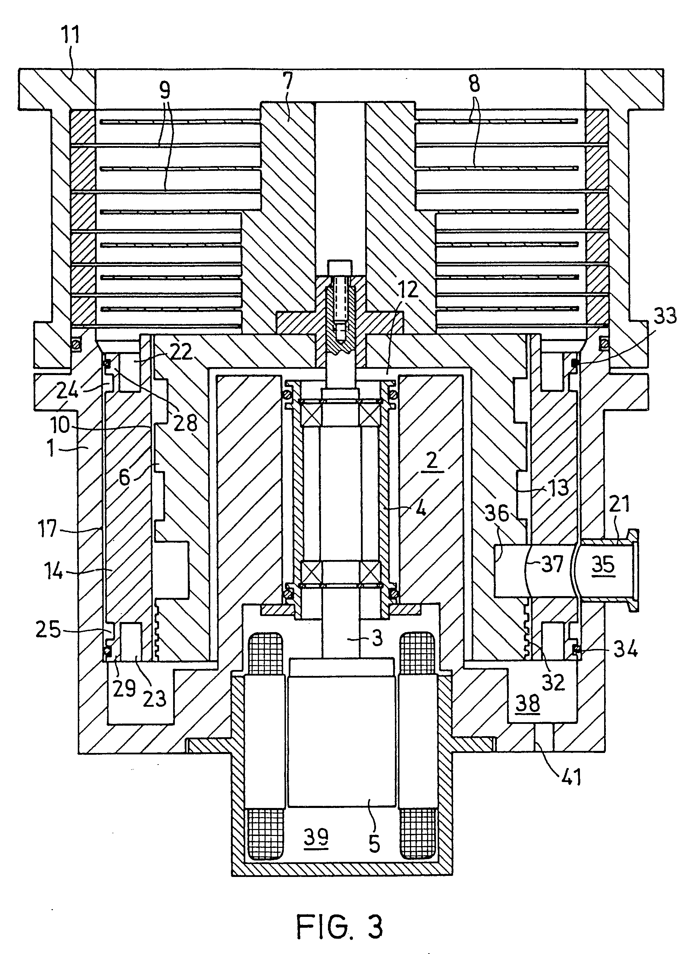

In allen Figuren ist das äussere Gehäuse mit 1 bezeichnet. Es ist mit einer zentralen, nach innen hineinragenden Lagerbuchse 2 ausgerüstet, in der sich eine Welle 3 mittels einer Spindellagerung 4 abstützt. Mit der Welle 3 gekoppelt sind der Antriebsmotor 5, der Rotor 6 der Molekularpumpenstufe und (bei den Ausführungsbeispielen nach den Figuren 1 und 3) der Rotor 7 der Turbomolekularpumpenstufe.

Der Rotor 7 ist mit den Rotorschaufeln 8 ausgerüstet, die gemeinsam mit den im Gehäuse 1 gehaltenen Statorschaufeln 9 die Turbomolekularpumpenstufe bilden. Mittels des Flansches 11 wird die jeweilige Pumpe an den zu evakuierenden Rezipienten angeschlossen.

Die Molekularpumpe (bzw. -pumpenstufe) umfasst den den Lagerraum 12 übergreifenden, glockenförmigen Rotor 6, der auf seiner Aussenseite mit gewindeähnlichen Nuten 13 ausgerüstet ist, in denen beim Betrieb der Pumpe die Gasförderung von der Hochvakuumseite zur Vorvakuumseite stattfindet. Dem Rotor 6 ist ein axial etwa gleich langer Stator 14 zugeordnet. Dieser ist als vom Gehäuse 1 separate Buchse ausgebildet. Zwischen dem Stator 14 und dem Rotor 6 befindet sich der Spalt 10. Dieser muss möglichst klein sein, um eine gute Abdichtung zwischen den Gewindenuten zu erreichen.

Beim Ausführungsbeispiel nach Fig. 1 stützt sich die Buchse 14 im Bereich ihrer Stirnseiten über O-Ringe 15 und 16 im Gehäuse 1 ab, und zwar derart, dass ein Ringspalt 17 entsteht. Dieser steht über die Bohrung 18 mit dem Vorvakuumraum 19 in Verbindung, so dass während des Betriebs der Pumpe eine thermische Vakuumisolierung zwischen Gehäuse 1 und Statorbuchse 14 besteht. An den Vorvakuumraum 19 ist der Vorvakuumstutzen 21 angeschlossen.

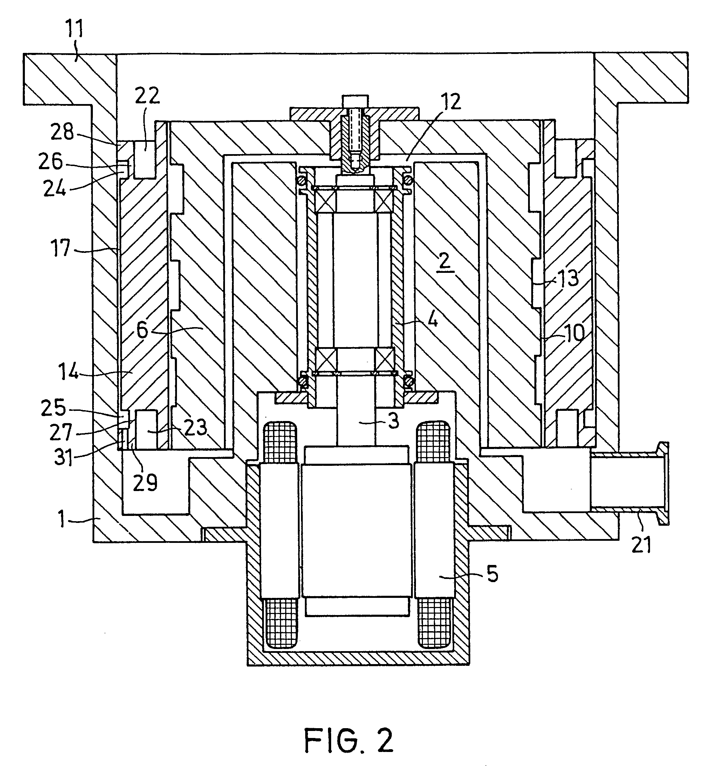

Beim Ausführungsbeispiel nach Fig. 2 weist die Statorbuchse 14 selbst Stützelemente auf. Dazu sind ihre Stirnseiten jeweils mit einer Axialnut 22, 23 und einer äusseren Radialnut 24, 25 versehen, und zwar derart, dass ein Zylinderabschnitt mit einem federnden und verjüngten Bereich 26, 27 entsteht. Der Wärmefluss über diese Bereiche ist gering bis vernachlässigbar. Die Ränder 28, 29 weisen jeweils einen gegenüber dem Hauptteil der Buchse etwas vergrösserten äusseren Durchmesser auf, so dass sich die Buchse 14 nur mit den Rändern 28, 29 im Gehäuse 1 abstützt und so der Ringspalt 17 entsteht. Der dem Vorvakuumraum 19 angrenzende Rand 29 ist mit einer Bohrung 31 zur Evakuierung des Ringspaltes 17 ausgerüstet.

Das Ausführungsbeispiel nach Fig. 3 weist axial hintereinanderliegend eine Molekularpumpenstufe — gebildet von der Gewindenut 13 auf dem oberen Abschnitt des Rotors 6 und dem Stator 14 — und eine Viskositätsdichtung — gebildet von der auf dem unteren Abschnitt befindlichen Gewindenut 32 und dem Stator 14 — auf.

Der der Molekularpumpenstufe und der Viskositätsdichtung gemeinsam zugeordnete Stator 14 weist — wie das Ausführungsbeispiel nach Fig. 2 — in seinen Endbereichen Radial- und Axialnuten 22 bis 25 auf. Unterschiedlich gegenüber dem Stator 14 nach Fig. 2 ist, dass die Ränder 28, 29 einen vergrösserten äusseren Durchmesser nicht mehr haben. Sie stützen sich über O-Ringe 33 und 34 im Gehäuse 1 ab. Das Ausführungsbeispiel nach Fig. 3 ist so gestaltet, dass zwischen der Molekularpumpenstufe und der Viskositätsdichtung der Vorvakuumanschluss 21 angeordnet ist. Der Vorvakuumraum 35 selbst wird gebildet von einer vertieften Nut 36 im Rotor 6 und von einer Bohrung 37 im Stator 14, die sich an den Vorvakuumstutzen 21 anschliesst. Im Raum 38 unterhalb von Stator 14 und Rotor 6 herrscht Atmosphärendruck. Durch die Viskositätsdichtung (Gewinde 32 im Zusammenwirken mit dem Stator 14) ist die Abdichtung des Vorvakuumraums 35 demgegenüber sichergestellt. Im von der Rotorglocke 6 übergriffenen Lagerraum 12 und dem Motorraum 39 herrscht ebenfalls Atmosphärendruck, so dass Schmierung und Kühlung dieser Bauteile keine Probleme bereiten. Über die Bohrung 41 im Gehäuse 1 besteht eine Verbindung zur Umgebung.

## Patentansprüche

1. Molekularvakuumpumpe beziehungsweise Molekularvakuumpumpenstufe mit einem Rotor (6), mit einem den Rotor (6) umgebenden Stator (14) sowie mit einem den Stator (14) seinerseits umgebenden Gehäuse (1), wobei die einander zugewandten Flächenbereiche des Rotors und/oder des Stators mit einer gewindeähnlichen, die Gasförderung bewirkenden Struktur (13, 32) versehen sind, dadurch gekennzeichnet, dass zwischen dem Stator (14) und dem umgebenden Gehäuse (1) ein Ringspalt (17) vorgesehen ist und dass dieser Ringspalt zur Erzielung einer thermischen Isolierung evakuiert ist.

2. Pumpe nach Anspruch 1, dadurch gekennzeichnet, dass der Stator (14) als vom Gehäuse (1) separate Buchse gestaltet ist und dass sich der evakuierte Ringspalt (17) zwischen dem Gehäuse und der Buchse befindet.

3. Pumpe nach Anspruch 2, dadurch gekennzeichnet, dass sich die Statorbuchse (14) über Elastomer- oder Metallringe (15, 16 oder 33, 34) mit kleinem Wärmeleitwert im äusseren Gehäuse (1) abstützt.

4. Pumpe nach Anspruch 2, dadurch gekennzeichnet, dass die Buchse selbst mit Stützelementen (28, 29) ausgerüstet ist.

5. Pumpe nach Anspruch 3 oder 4, dadurch gekennzeichnet, dass die Buchse stirnseitig mit zylindrischen Abschnitten (26, 27) ausgerüstet ist, deren Wandstärke wesentlich kleiner ist als die Buchsenstärke und die die Stützelemente (28, 29) tragen.

6. Pumpe nach Anspruch 5, dadurch gekennzeichnet, dass die Statorbuchse (14) mit Radial- und stirnseitigen Axialnuten (22 bis 25) zur Bildung der federnden Stützelemente ausgerüstet ist.

7. Pumpe nach einem der Ansprüche 3 bis 6, dadurch gekennzeichnet, dass der zwischen Statorbuchse (14) und Gehäuse (1) liegende Ringspalt (17) mit einem Raum (19, 35) mit subatmosphärischem Druck, vorzugsweise der Vorvakuumseite einer Vakuumpumpe, verbunden ist.

8. Pumpe nach einem der vorhergehenden Ansprüche, dadurch gekennzeichnet, dass die Massen von Rotor (6) und Stator (14) etwa gleich sind.

9. Pumpe nach einem der vorhergehenden Ansprüche, dadurch gekennzeichnet, dass ihr Rotor (6) mit dem Rotor (7) einer Turbomolekularvakuumpumpe verbunden ist und dass die Turbomolekularpumpe der Molekularpumpe in bezug auf die Richtung der geförderten Gase vorgelagert ist.

10. Pumpe nach einem der vorhergehenden Ansprüche, dadurch gekennzeichnet, dass ihr eine Molekular- oder Viskositätsdichtung nachgeordnet ist und dass Pumpe und die Dichtung einen gemeinsamen, gegenüber dem umgebenden Gehäuse (1) durch einen evakuierten Ringspalt (17) thermisch isolierten Stator (14) umfassen.

11. Pumpe nach Anspruch 10 mit einem Vorvakuumanschluss, dadurch gekennzeichnet, dass der Vorvakuumanschluss (21) zwischen der Molekularpumpenstufe und der Viskositätsdichtung angeordnet ist und dass die Viskositätsdichtung den Vorvakuumraum (35) gegenüber der Atmosphäre trennt.

12. Pumpe nach Anspruch 10 oder 11, dadurch gekennzeichnet, dass Molekularpumpe und Viskositätsdichtung axial hintereinander angeordnet sind und dass der Ringspalt (10) der Molekularpumpe und der Molekular- beziehungsweise Viskositätsdichtung den gleichen Radius haben.

**Claims**

1. A molecular vacuum pump or molecular vacuum pump stage, comprising a rotor (6), a stator (14) surrounding the rotor (6) and a housing (1) in turn surrounding the stator (14), the surface areas facing each other of the rotor and/or of the stator being provided with a thread-like structure (13, 32) which effects gas conveyance, characterized in that an annular gap (17) is provided between the stator (14) and the surrounding housing (1) and in that this annular gap is evacuated to achieve thermal insulation.

2. A pump according to claim 1, characterized in that the stator (14) is constructed as a bushing separate from the housing (1) and in that the evacuated annular gap (17) is located between the housing and the bushing.

3. A pump according to claim 2, characterized in that the stator bushing (14) is supported in the outer housing (1) by elastomer or metal rings (15, 16 or 33, 34) with low coefficients of thermal conductivity.

4. A pump according to claim 2, characterized in that the bushing is itself provided with support members (28, 29).

5. A pump according to claim 3 or claim 4, characterized in that the bushing is provided on the front side with cylindrical sections (26, 27), the wall thicknesses of which are substantially smaller than the bushing thickness and which carry the support members (28, 29).

6. A pump according to claim 5, characterized in that the stator bushing (14) is provided with radial and front-side axial grooves (22 to 25) for forming the resilient support members.

7. A pump according to any one of claims 3 to 6, characterized in that the annular gap (17) lying between the stator bushing (14) and the housing (1) is connected with a chamber (19, 35) at subatmospheric pressure, preferably the pre-vacuum side of a vacuum pump.

8. A pump according to any one of the preceding claims, characterized in that the masses of the rotor (6) and stator (14) are approximately equal.

9. A pump according to any one of the preceding claims, characterized in that its rotor (6) is connected with the rotor (7) of a turbo-molecular vacuum pump and in that the turbo-molecular pump is positioned in front of the molecular pump with respect to the direction of conveyance of the gases.

10. A pump according to any one of the preceding claims, characterized in that a molecular or viscosity seal is positioned thereafter and in that the pump and seal comprise a common stator (14), thermally insulated from the surrounding housing (1) by an evacuated annular gap (17).

11. A pump according to claim 10 with a pre-vacuum connection, characterized in that the pre-vacuum connection (21) is arranged between the molecular pump stage and the viscosity seal and in that the viscosity seal separates the pre-vacuum chamber (35) from the atmosphere.

12. A pump according to claim 10 or claim 11, characterized in that the molecular pump and viscosity seal are arranged axially one after the other and in that the annular gap (10) of the molecular pump and the molecular or viscosity seal have the same radius.

**Revendications**

1. Pompe à vide moléculaire ou étage de pompe à vide moléculaire comportant un rotor (6), un stator (14) entourant le rotor (6) ainsi qu'un carter (1) qui, de son côté, entoure le stator (14), étant précisé que les zones de surface, tournées l'une vers l'autre, du rotor et/ou du stator sont munies d'une structure (13, 32) semblable à un filetage et opérant le transport du gaz, caractérisé en ce qu'entre le stator (14) et le carter (1) qui l'entoure, est prévue une fente annulaire (17); et en ce que cette fente annulaire est mise sous vide pour donner une isolation thermique.

2. Pompe selon la revendication 1, caractérisée en ce que le stator (14) est conçu sous forme d'une chemise distincte du carter (1); et en ce que la fente annulaire mise sous vide (17) se trouve entre le carter et la chemise.

3. Pompe selon la revendication 1, caractérisée en ce que la chemise de stator (14) s'appuie dans le carter extérieur (1) avec un faible coefficient de conduction thermique, par l'intermédiaire de bagues élastomères ou métalliques (15, 16 ou 33, 34).

4. Pompe selon la revendication 1, caractérisée en ce que la chemise elle-même est équipée d'éléments d'appui (28, 29).

5. Pompe selon la revendication 3 ou 4, caractérisée en ce que la chemise comporte, côté frontal, des portions cylindriques (26, 27) dont l'épaisseur de paroi est sensiblement inférieure à celle de la chemise et qui portent les éléments d'appui (28, 29).

6. Pompe selon la revendication 5, caractérisée en ce que la chemise de stator (14) comporte des rainures radiales et des rainures axiales côté frontal (22 à 25) pour former les éléments d'appui élastiques.

7. Pompe selon l'une des revendications 3 à 6, caractérisée en ce que la fente annulaire (17) qui se trouve entre la chemise de stator (14) et le carter (1) est reliée à une chambre (19, 35) dans laquelle règne une pression inférieure à la pression atmosphérique, de préférence au côté vide préparatoire d'une pompe à vide.

8. Pompe selon l'une des revendications précédentes, caractérisée en ce que les masses du rotor (6) et du stator (14) sont à peu près égales.

9. Pompe selon l'une des revendications précédentes, caractérisée en ce que son rotor (6) est relié au rotor (7) d'une pompe à vide moléculaire à turbine; et en ce que la pompe moléculaire à turbine est montée en amont de la pompe moléculaire en se référant au sens de transport des gaz.

10. Pompe selon l'une des revendications précédentes, caractérisée en ce qu'en aval de la pompe est disposée une garniture d'étanchéité moléculaire ou à effet de viscosité; et en ce que la pompe et la garniture d'étanchéité comprennent un stator commun (14) thermiquement isolé à l'égard du carter (1) qui l'entoure par une fente annulaire (17) mise sous vide.

11. Pompe selon la revendication 10, comportant un raccord pour le vide préparatoire, caractérisée en ce que le raccord pour le vide préparatoire (21) est disposé entre l'étage de pompe moléculaire et la garniture d'étanchéité à effet de viscosité; et en ce que la garniture d'étanchéité à effet de viscosité sépare la chambre de vide préparatoire (35) d'avec l'atmosphère.

12. Pompe selon la revendication 10 ou 11, caractérisée en ce que la pompe moléculaire et la garniture d'étanchéité à effet de viscosité sont disposées axialement l'une derrière l'autre; et en ce que la fente annulaire (10) de la pompe moléculaire et de la garniture d'étanchéité moléculaire ou de la garniture d'étanchéité à effet de viscosité ont le même rayon.

FIG. 1

FIG. 2

FIG. 3